# EUROPÄISCHE PATENTSCHRIFT

(11) **EP 1 020 777 B1**
(45) Veröffentlichungstag und Bekanntmachung des Hinweises auf die Patenterteilung: **23.04.2008**
(21) Anmeldenummer: 99124987.1
(22) Anmeldetag: 15.12.1999
(51) Int. Cl.: G05B 19/401

(54) **Koordinatenmessgerät**
Coordinate measuring device
Appareil de mesure de coordonnées

(30) Priorität: 12.01.1999 DE 19900724
(43) Veröffentlichungstag der Anmeldung: 19.07.2000
(73) Patentinhaber: Carl Zeiss Industrielle Messtechnik GmbH, 73447 Oberkochen (DE)
(72) Erfinder: Ruck, Otto, 73479 Ellwangen-Pfahlheim (DE)
(74) Vertreter: Henckell, Carsten

(56) Entgegenhaltungen:
- EP-A- 0 569 694
- DE-A- 19 529 547
- US-A- 5 621 672
- DUNLOP G R: "Mechatronics-motion control for teaching and research" MECHATRONICS AND MACHINE VISION IN PRACTICE, 1997. PROCEEDINGS., FOURTH ANNUAL CONFERENCE ON TOOWOOMBA, QLD., AUSTRALIA 23-25 SEPT. 1997, LOS ALAMITOS, CA, USA,IEEE COMPUT. SOC, US, 23. September 1997 (1997-09-23), Seiten 2-7, XP010248245 ISBN: 0-8186-8025-3

## Beschreibung

Die Erfindung betrifft ein Koordinatenmeßgerät mit Antrieben zum Verstellen der Komponenten des Koordinatenmeßgerätes, wobei die Antriebe in einem fest definierten Zeittakt nacheinander vorgegebenen Antriebssollwerten entsprechend verstellt werden, sowie ein entsprechendes Verfahren.

Ein derartiges Koordinatenmeßgerät ist aus dem Stand der Technik bereits bekannt, und beispielsweise in dem US-Patent 5,471,406 oder aber auch in dem US-Patent 5,726,917 detailliert beschrieben. In den hierin gezeigten Koordinatenmeßgeräten werden von einem Rechner an eine Steuerung zunächst Daten über zu vermessende Geometrielemente eines Werkstückes übergeben. Die Steuerung erzeugt aus den Daten dann Antriebssollwerte, die an die Antriebe des Koordinatenmeßgerätes weitergegeben werden. Beispielsweise erzeugt die Steuerung sogenannte Lagesollwerte, die an die Lageregelkreise der Antriebe zum Verfahren des Tastkopfes in den drei Koordinatenmeßrichtungen in einem fest definierten Zeittakt nacheinander übergeben werden und von den Antrieben dann entsprechend abgefahren werden. Analoges gilt für die Sollmeßkraft, die über Meßkraftgeneratoren auf den Taststift aufgeschaltet wird. Auch diese wird entsprechend der Geometrie des abzutastenden Geometrieelementes im Voraus berechnet und während des Abtastens entsprechend an die Meßkraftgeneratoren übergeben.

Während des Abtastens des Werkstückes werden in den drei Koordinatenmeßrichtungen die jeweiligen Maschinenpositionen des Tastkopfes aufgenommen sowie zusätzlich auch die Taststiftauslenkung aufgenommen und ebenfalls in der Steuerung ausgewertet.

Die von der Steuerung erzeugten Antriebssollwerte werden hierbei so berechnet, daß diese nacheinander im Zeittakt an den Antrieben anliegen müssen, da sonst im Meßablauf Probleme auftreten. Beispielsweise werden die Lagesollwerte so berechnet, daß die Antriebe den Tastkopf entsprechend einem Geschwindigkeits- und Beschleunigungsprofil verfahren. Werden die Lagesollwerte dann jedoch zeitlich nicht nacheinander exakt im Zeittakt angefahren, so kommt es in den Antrieben des Koordinatenmeßgerätes zu übermäßig starken Brems- oder Anfahrbeschleunigungen, die schnell zu einer Überbeanspruchung des Koordinatenmeßgerätes führen können.

Andersherum ist es genauso notwendig, daß die gemessenen Meßwerte, wie beispielsweise die Taststiftauslenkung, also die Auslenkung des Taststiftes gegenüber dem Tastkopf oder die Maschinenposition, also die Positionen des Tastkopfes im Maschinenkoordinatensystem zeitlich immer korrekt erfaßt wird, da sonst einzelne Meßpunkte, die sowohl bei der Meßdatenauswertung erforderlich sind, wie auch zur Nachregelung der vorberechneten Lagesollwerte erforderlich sind, nicht mehr korrekt ausgewertet werden können.

Bei den Koordinatenmeßgeräten die in den US-Patenten US 5,471,406 und US 5,726,917 beschrieben wurden, wird dieses Echtzeitverhalten dadurch erreicht, indem die einzelnen Komponenten der Steuerung als Mikroprozessoren ausgeführt sind, die ein sehr gutes Echtzeitverhalten aufweisen und für die, sowohl die Bereitstellung der Lagesollwerte für die Lageregelkreise der Antriebe, wie auch die Aufnahme der Meßwerte keinerlei Problem darstellt.

Das US-Patent 5,621,672 zeigt ein Steuerungssystem zur Steuerung einer Vielzahl von Robotern, wie z.B. Schweißroboter. Das System weist echtzeitfähige Prozessoren auf, über die die Servomotoren der Roboterachsen auf eine vorgegebene Position geregelt werden. Die Vorgaben der anzufahrenden Zielposition entnimmt der betreffende echtzeitfähige Prozessor einem Speicher, in dem die Zielposition und ein Startsignal eingespeichert werden kann. Ein Abschluss des Verstellvorgangs wird bestätigt, indem der echtzeitfähige Prozessor in dem besagten Speicher die tatsächlich eingestellte Position ablegt. Der besagte Speicher ist außerdem mit einem Multitask-Prozessor verbunden, der im Speicher die Zielposition und das Startsignal anlegt, wie auch hieraus die tatsächlich eingestellte Position abfragt. Der Multitask-Prozessor wiederum ist mit einer Vielzahl von Bediener-Terminals verbunden, über die entsprechende Aufträge an Multitask-Prozessor übergeben werden können, die dann vom Multitask-Prozessor abgearbeitet werden.

In neuerer Zeit sind auf dem Markt immer kostengünstigere und leistungsfähigere Rechner erhältlich, so daß zunehmend der Wunsch entsteht, die Funktionalität der Steuerung, die bislang durch Mikroprozessoren erfüllt wurde, nach und nach durch den Zentralprozessor des Auswerterechners durchführen zu lassen. Dieser Wunsch war jedoch bislang nicht ohne größeren Zusatzaufwand umsetzbar, da die heute verfügbaren Betriebssysteme für entsprechende Rechner, wie beispielsweise UNIX, LINUX, WINDOWS 95, WINDOWS NT etc. kein oder nur ein ungenügendes Echtzeitverhalten aufweisen. Unter Echtzeitverhalten sollte hierbei in dieser Anmeldung verstanden werden, daß der Rechner Zeiträume von länger als 0,1 Millisekunden aufweist, in denen er an die Antriebe keine Antriebssollwerte senden kann und in denen er ebensowenig Meßwerte empfangen kann. Bei der Implementierung der steuerungseigenen Einheiten als Software in einem derartigen Rechner würde dies zwangsläufig dazu führen, daß einzelne erzeugte Antriebssollwerte verloren gehen, mit der Folge, daß beispielsweise die Mechanik des Koordinatenmeßgerätes hierdurch unweigerlich überbeansprucht würde, oder daß einzelne Meßwerte verloren gehen, was dazu führt, daß eine vernünftige Nachregelung der Lagesollwerte oder eine vernünftige Auswertung der Meßwerte nicht mehr gewährleistet ist.

Aufgabe der vorliegenden Erfindung ist es deshalb hiervon ausgehend, ein Koordinatenmeßgerät vorzuschlagen, bei dem möglichst viele Funktionen der Steuerung durch einen Rechner mit einem Betriebssystem ohne Echtzeitverhalten übernommen werden, sowie ein entsprechendes Verfahren, mit dem dies möglich ist.

Die Aufgabe wird gemäß den Merkmalen der unabhängigen Ansprüche 1 und 9 gelöst.

Der erfinderische Grundgedanke ist hierbei darin zu sehen, daß die Antriebssollwerte in einem Steuerrechner mit einem Betriebssystem ohne Echtzeitverhalten berechnet werden und eine Baugruppe bereitgestellt wird, in der im Voraus auf Anforderung des Steuerrechners mehrere in den folgenden Takten abzufahrende Lagesollwerte abgespeichert werden und die die im voraus abgespeicherten Lagesollwerte automatisch im Zeittakt an die Antriebe weitergibt und/oder in der zusätzlich mehrere in dem vorgegebenen Zeittakt aufgenommene Meßwerte abgespeichert werden und auf Anforderung des Steuerrechners zur Auswertung an den Steuerrechner übergeben werden.

Hierdurch ergibt sich der besondere Vorteil, daß nunmehr auch nahezu alle Steuerungsfunktionen mit einem sehr kostengünstigen Steuerrechner mit einem Betriebssystem ohne Echtzeitverhalten durchgeführt werden können und trotz alledem gewährleistet ist, daß keine Antriebssollwerte und/oder Meßwerte verloren gehen.

Als mögliche Antriebssollwerte kommen hierbei die unterschiedlichsten Werte in Frage. Neben den Lagesollwerten, mit denen die Antriebe zum Verfahren des Tastkopfes in den drei Koordinatenrichtungen angesteuert werden, kann es sich bei den Antriebssollwerten auch um die Sollmeßkraftwerte handeln, über die die Meßkraftgeneratoren angesteuert werden, wenn es sich um einen entsprechenden messenden Tastkopf handelt. Für den Fall beispielsweise, daß als Tastkopf ein eindimensional messender optischer Tastkopf eingesetzt wird, der an einer Dreh-Schwenk-Einheit befestigt ist, können die Antriebssollwerte auch die von der Dreh-Schwenk-Einheit einzustellenden Solldrehwinkel sein.

Die Meßwerte können ebenfalls vielfältig variieren. Sie werden üblicherweise die sogenannte Maschinenposition des Tastkopfes, d.h. die genaue Position des Tastkopfes im Maschinenkoordinatensystem umfassen. Diese Maschinenposition wird durch Ablesen von Maßstäben über entsprechende Abtastköpfe erzielt, wobei die betreffenden Maßstäbe an der Mechanik zum Verfahren des Tastkopfes in den einzelnen Koordinatenrichtungen befestigt sind und die Maschinenposition in den einzelnen Meßrichtungen (x, y, z) wiedergeben.

Auch das Meßsignal des Tastkopfes ist ein üblicher Meßwert. Im Falle beispielsweise eines sogenannten messenden Tastkopfes, bei dem ein Taststift gegenüber dem Tastkopf beweglich gelagert ist, handelt es sich bei dem Meßwert um die Auslenkung des Taststiftes aus seiner Ruhelage; bei einem optischen Tastkopf beispielsweise um den Abstand der Werkstückoberfläche zum Tastkopf. Sollte es sich um einen messenden Tastkopf mit aktiven Meßkraftgeneratoren handeln, kann es zusätzlich sinnvoll sein die tatsächlich eingestellten Meßkräfte zu erfassen. Ein weiterer möglicher Meßwert wäre der eingestellte Drehwinkel sowie der eingestellte Schwenkwinkel einer Dreh-Schwenk-Einheit.

In einer besonders vorteilhaften Weiterbildung der Erfindung werden die Antriebssollwerte und/oder die Meßwerte zusammen mit einer Zeitinformation in der Baugruppe gespeichert, die den Zeitpunkt im Meßablauf angibt, zu dem der betreffende Antriebssollwert angefahren wird und/oder die Meßwerte aufgenommen sind. Hierdurch lassen sich jederzeit die in der Baugruppe gespeicherten Antriebssollwerte sowie die Meßwerte zeitlich in den Meßablauf einordnen. Die Zeitinformation kann hierbei beispielhaft die kumulierte Anzahl an Taktflanken des Zeittaktes seit Beginn des Meßablaufes sein. Die Zeitinformation für die Meßwerte kann hierbei einfach durch einen Zähler ermittelt werden, der die Taktflanken des Zeittaktes zählt, und der zu Beginn des Meßablaufes zurückgesetzt wird. Die Zeitinformation der Antriebssollwerte hingegen muß rechnerisch durch den Steuerrechner im Voraus berechnet werden.

Zur Realisierung der Funktionalität können die Komponenten der Baugruppe im einfachsten Fall aus einfachen Hardwarekomponenten aufgebaut sein und hierzu wenigstens ein bzw. mehrere Schieberegister umfassen, sowie gegebenenfalls einen Zähler für die Zeitinformation und/oder eine Schreib-Lese-Baugruppe, über die das Schieberegister durch den Steuerrechner beliebig geladen und ausgelesen werden kann. Durch den Takt werden die Antriebssollwerte und/oder die aufgenommenen Meßwerte in dem bzw. den Schieberegistern gegebenenfalls zusammen mit der zugehörigen Zeitinformation jeweils um einen Speicherplatz weitergeschoben. Der Zähler, der optional die besagte Zeitinformation liefert, wird ebenfalls im Takt der Baugruppe inkrementiert. Die Schreib-Lese-Baugruppe kann unter Ansteuerung des Rechners die Schieberegister auslesen bzw. beschreiben.

In einer etwas aufwendigeren Gestaltung kann zusätzlich ein Single-Chip-Controller vorgesehen werden, über den die Schieberegister und gegebenenfalls der Zähler und die Schreib-Lese-Baugruppe angesteuert und verwaltet werden. Hierdurch läßt sich das Verhalten der einzelnen Komponenten gezielt koordinieren und gegebenenfalls auch verändern. Insbesondere können auch einzelne oder alle Komponenten, wie beispielsweise der Zähler unmittelbar durch den Single-Chip-Controller emuliert werden.

Die Aufgabe kann aber selbstverständlich auch nur durch einen Mikroprozessor realisiert werden, der die einzelnen Komponenten komplett durch ein entsprechendes Programm emuliert. Zur Emulation des Schieberegisters und der Schreib-Lese-Baugruppe kann der Mikroprozessor dann einen Speicherbereich des Mikroprozessors reservieren und die Schreib- und Leseoperationen gesteuert durch das Programm dann analog zur oben beschriebenen Funktionalität des Schieberegisters und der Schreib-Lese-Baugruppe organisieren. Sowohl das Einspeichern der besagten Antriebssollwerte auf Anfrage des Rechners in unterschiedliche Speicherplätze und das übermitteln der Antriebssollwerte entsprechend dem angelegten Zeittakt an die Antriebe, wie auch das Abspeichern der gemessenen Meßwerte im richtigen Zeittakt und das Auslesen der Meßwerte an den Steuerrechner wird dann alleine im Mikroprozessor realisiert.

Weitere Vorteile und Weiterbildungen der Erfindung werden nunmehr anhand der folgenden Figurenbeschreibung gezeigt.

Hierin zeigen:
- Figur 1: eine rein schematische Schaltskizze einer Steuerung eines entsprechenden Koordinatenmeßgerätes; und
- Figur 2: eine detaillierte Prinzipschaltskizze der Baugruppe (1) "echtzeitgetakteter Datenbuffer".

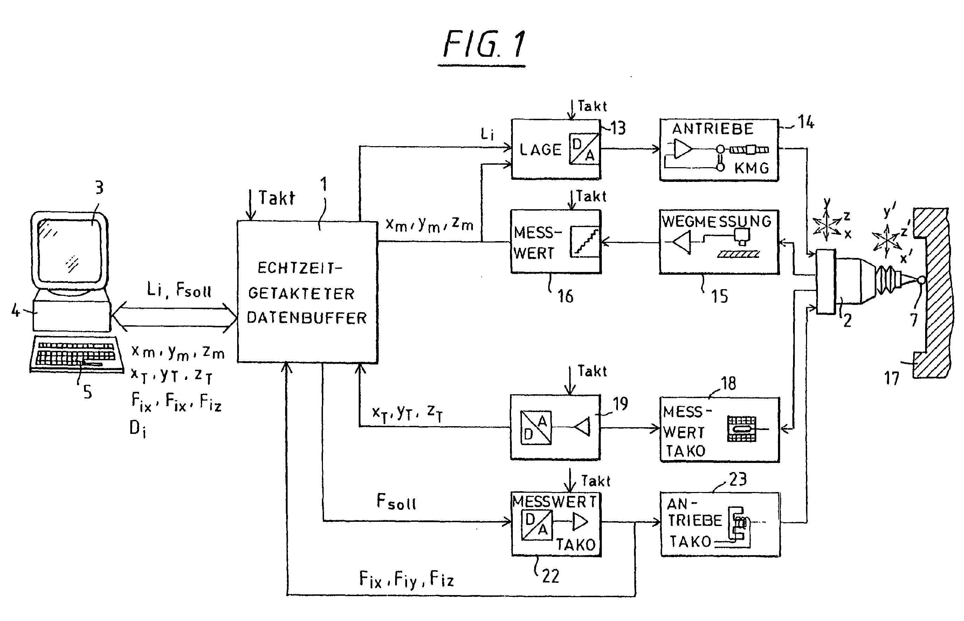

Figur 1 zeigt eine rein prinzipielle Übersichtsskizze der erfindungsgemäßen Steuerung eines Koordinatenmeßgerätes. Die Steuerung funktioniert hierbei im wesentlich derart, daß zunächst aus der Angabe eines zu vermessenden Geometrieelementes auf einer Werkstückoberfläche sogenannte Lagesollwerte (Lᵢ) berechnet werden, denen gemäß die Antriebe (14) zum Verfahren des Tastkopfes in den drei Koordinatenrichtungen (x, y, z) verfahren werden. Die Lagesollwerte (Lᵢ) geben hierbei die exakte Position für jeden der drei Antriebe in den drei Koordinatenrichtungen für einen festen Zeitpunkt an und werden einem Zeittakt (Takt) folgend nacheinander abgearbeitet. Die Lagesollwerte (Lᵢ) werden hierbei an den Lageregler (13) übergeben, der entsprechend der Lagesollwerte die Antriebe (14) in den drei Koordinatenrichtungen (x, y, z) antreibt. Über entsprechende Wegmeßeinheiten (15), d.h. also Maßstäbe und zugeordnete Sensoren zum Auslesen der Maßstäbe, kann dann die exakte Position (Xₘ, Yₘ, Zₘ) des Tastkopfes im Maschinenkoordinatensystem gemessen werden und über die Baugruppe (16) "Meßwerterfassung" zum einen an den Lageregler (13) rückgekoppelt werden, um hierdurch entsprechend nachregeln zu können und zum anderen an die Steuerung zurückgegeben werden, um hierdurch die Meßergebnisse auswerten zu können. In analoger Weise erzeugt die Steuerung gleichfalls sogenannte Sollmeßkräfte (Fₛₒₗₗ), mit denen der Taststift (7) über entsprechende Meßkraftgeneratoren (23) in den drei Koordinatenrichtungen (x, y, z) gegenüber dem Tastkopf (2) beaufschlagt wird. Die entsprechenden Meßkräfte werden ebenfalls in der Steuerung berechnet und zwar derart, daß sie normal auf die Werkstückoberfläche im betreffenden Meßpunkt gerichtet sind. Die Komponenten des Meßkraftvektors werden hierbei an eine Baugruppe (22) übergeben, die wiederum die Meßkraftgeneratoren (23) im Tastkopf (2) ansteuert. Die tatsächlich eingestellte Ist-Meßkraft (Fᵢₓ, F_{iy}, F_{iz}) kann hierbei, wenn es sich bei den Meßkraftgeneratoren (23) beispielsweise um elektromagnetische Linearmotoren handelt, anhand von den Strömen, die jeweils durch die einzelne Meßkraftgeneratoren fließen, gemessen werden und entsprechend an die Steuerung zurückgemeldet werden. Darüberhinaus wird über entsprechende Sensoren (18) im Tastkopf (2) die Auslenkung des Taststiftes (7) gegenüber dem Tastkopf (2) in den drei Koordinatenmeßrichtungen gemessen und als sogenannte Taststiftauslenkung (X_{T}, Y_{T}, Z_{T}) ebenfalls an die Steuerung zur Meßdatenauswertung und gegebenenfalls zur Rückkopplung auf die Lagesollwerte weitergeleitet.

Eine derartige Steuerung ist im Detail in unserem deutschen Patent DE 421 24 55 C2 sowie dem korrespondierenden US-Patent US 5,471,406 und auch in unserer deutschen Offenlegungsschrift DE 195 29 547 A1 und dem hierzu korresspondierenden US-Patent US 5,726,917 beschrieben, auf die hiermit ausdrücklich Bezug genommen wird.

Wie bereits eingangs ausgeführt, sind in letzter Zeit starke Bestrebungen im Gange, die einzelnen Komponenten der Steuerung, die in den betreffenden oben genannten Dokumenten als einzelne Mikroprozessoren mit eigener Firmware ausgestattet waren, zunehmend durch die Zentraleinheit des Steuerrechners (3, 4, 5) mit zu übernehmen. Wie bereits ebenfalls ausgeführt, besteht hierbei jedoch das erhebliche Problem, daß bei den heute üblichen Rechnern keine echtzeitfähigen Betriebssysteme vorliegen, so daß eine zeitrichtige Anlieferung der Antriebssollwerte, also z.B. der Lagesollwerte (Lᵢ) an den Lageregler (13) oder eine chronologische Aufzeichnung der Meßwerte wie beispielsweise der Maschinenposition (Xₘ, Yₘ, Zₘ) und der Taststiftauslenkung (X_{T}, Y_{T}, Z_{T}) an den Steuerrechner (3, 4, 5) nicht sichergestellt werden kann. Zu den nicht echtzeitfähigen Betriebssystemen zählen hierbei beispielsweise UNIX, LINUX, WINDOWS NT, WINDOWS 98 etc..

Um diesen Anforderungen gerecht zu werden, weist die Steuerung gemäß Figur 1 eine Baugruppe (1) mit der Bezeichnung " echtzeitgetakteter Datenbuffer " auf, in der im voraus auf Anforderung des Steuerrechners (3, 4, 5) mehrere in den folgenden Takten anzufahrende Antriebssollwerte (Lᵢ, Fₛₒₗₗ) abgespeichert werden und die im voraus abgespeicherten Antriebssollwerte (Lᵢ, Fₛₒₗₗ) automatisch im Zeittakt an die Antriebe (14, 23) des Koordinatenmeßgerätes weitergegeben werden. Damit gelingt es, im Steuerrechner (3, 4, 5) mit einem Betriebssystem ohne Echtzeitverhalten die Antriebssollwerte (Lᵢ, F_{Soll}) zu berechnen und trotzdem an die Antriebe (14, 23) in einem fest definierten Zeittakt nacheinander die vorgegebenen Antriebssollwerte (Lᵢ, F_{Soll}) zeitrichtig zu liefern.

Analog ist gleichfalls auch für die zeitrichtige Erfassung der gemessenen Meßwerte, also die gemessenen Maschinenpositionen (Xₘ, Yₘ, Zₘ), die gemessene Taststiftauslenkung (X_{T}, Y_{T}, Z_{T}) und die Istmeßkraft (Fᵢₓ, F_{iy}, F_{iz}) zu sorgen. Die Baugruppe speichert ebenfalls mehrere in dem vorgegebenen Zeittakt aufgenommene Meßwerte zeitrichtig nacheinander in der Baugruppe (1) und übergibt diese Meßwerte auf Anforderung des Steuerrechners (3, 4, 5) an diesen zur Auswertung und zur Lageregelung.

Um die einzelnen Daten, d.h. also die Antriebssollwerte (Lᵢ, F_{Soll}) und die Meßwerte (Xₘ, Yₘ, Zₘ; X_{T}, Y_{T}, Z_{T}; Fᵢₓ, F_{iy}, F_{iz}) in jedem Fall chronologisch richtig zuordnen zu können, sollten die betreffenden Werte zusammen mit einer Zeitinformation in der Baugruppe (1) abgespeichert werden, die den Zeitpunkt im Meßablauf angibt, zu dem der betreffende Antriebssollwert angefahren wird und/oder die Meßwerte aufgenommen sind. Hierdurch läßt sich eine eindeutige Zuordnung der betreffenden Werte zum zeitlichen Ablauf auch im nachhinein rekonstruieren.

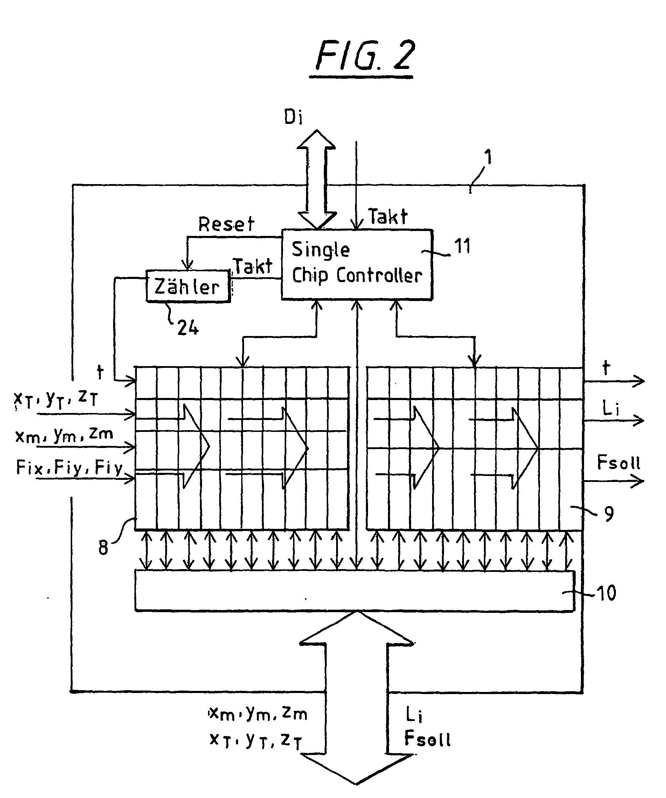

Eine prinzipielle Skizze, wie die Baugruppe (1) mit der Bezeichnung "echtzeitgetakteter Datenbuffer" hierbei aufgebaut sein könnte, ist Figur 2 zu entnehmen. Wie aus Figur 2 zu sehen, weist die Baugruppe (1) hierbei zwei schieberegisterartige Speicher (8) und (9) auf, deren Speicherplätze über einen Single Chip Controller (11) pro Zeittakt (Takt) jeweils um eine Speicherstelle nach rechts verschoben werden. Das linke Schieberegister (8) ist hierbei mit den Meßwerten, die hierbei rein beispielhaft die Taststiftauslenkung (X_{T}, Y_{T}, Z_{T}), die Maschineposition (Xₘ, Yₘ, Z_{M}) sowie die Ist-Meßkraft (Fᵢₓ, F_{iy}, F_{iz}) umfassen, gespeichert. Wie zu sehen ist, liegen die aktuellen Meßwerte hierbei am linken Speicherplatz des Schieberegisters (8) an und füllen diesen Speicherplatz automatisch. Zusätzlich liegt am oberen, linken Speicherplatz des Schieberegisters (8) eine Zeitinformation (t) an, die den exakten Zeitpunkt angibt, zu dem die Meßwerte in den betreffenden Speicherplatz eingeschrieben wurden. Dies ist die Summe der Taktflanken des Zeittaktes (Takt) seit Beginn des Meßablaufes, die durch einen Zähler (24) gezählt wird, so daß sich hierüber exakt rekonstruieren läßt, zu welchem Zeitpunkt die Meßwerte in das Schieberegister (8) eingegangen ist. Der Zähler (24) wird über die Leitung "Reset" zu Beginn eines neuen Meßvorganges zurückgesetzt. Der Inhalt der betreffenden Speicherstellen wird nunmehr im Takt der Baugruppe (1) immer um eine Stelle nach rechts verschoben, so daß die linkeste Speicherspalte immer wieder neu mit neuen Meßwerten gefüllt werden kann. Sollte der Steuerrechner (4) nunmehr einmal nicht rechtzeitig die betreffenden Meßwerte auslesen können, so werden die betreffenden Meßwerte mit der entsprechenden Zeitinformation (t) während eines Zeitraumes von hier beispielhaft 10 Takten in dem Register (8) gebuffert, wobei die Baugruppe (1) dann, wenn der Steuerrechner wieder aktiv ist, alle 10 Meßwerte über die Schreib-Lese-Baugruppe (10) aus dem Register (8) auslesen kann und an den Steuerrechner (4) übertragen kann.

Ähnlich ist die Funktionsweise des zweiten Registers (9), in dem die Antriebssollwerte (Lᵢ, Fₛₒₗₗ) gespeichert werden. Hierbei werden die hier beispielhaft für 10 Takte im voraus berechneten Antriebssollwerte, d.h. hier also die Lagesollwerte (Lᵢ) und die Meßkraftsollwerte (Fₛₒₗₗ) auf Anforderung des Steuerrechners gemeinsam mit einer entsprechenden Zeitinformation (t), die ebenfalls im Steuerrechner im voraus berechnet wurde, über die Schreib-Lese-Baugruppe (10) in das Register (9) eingeschrieben. Das nunmehr mit Antriebssollwerten geladene Register (9) wird im Zeittakt jeweils um eine Speicherstelle nach rechts verschoben, so daß in der rechtesten Spalte des Registers (9) immer die aktuellen Antriebssollwerte anliegen und an die betreffenden Antriebe, d.h. also die Meßkraftgeneratoren (23) und die Antriebe des Koordinatenmeßgerätes (14) weitergereicht werden können. Hierdurch ist es möglich, daß der Steuerrechner während einer Anzahl von Zeittakten auch einmal keine Antriebssollwerte liefern kann und das Koordinatenmeßgerät trotzdem den vorher definierten Meßablauf weiterführen kann. Nachdem der Steuerrechner in einem solchen Fall dann wieder aktiv ist, können in einem nächsten Schritt die nun wieder entleerten Speicherspalten des Registers (9) entsprechend aufgefüllt werden. Darüberhinaus ist es selbstverständlich möglich, die bereits beschriebenen Speicherspalten des Registers (9) mit einer neuen Information zu überschreiben, wenn beispielsweise die tatsächliche Geometrie des Werkstückes gegenüber der Sollgeometrie abweicht und somit die Lagesollwerte (Lᵢ) zur Ansteuerung der Antriebe (14) nachkorrigiert werden müssen. Es sollte an dieser Stelle noch einmal ausdrücklich angemerkt werden, daß es selbstverständlich Ziel der Steuerung sein muß, immer durch den Rechner (3, 4, 5) die aktuellsten Meßwerte aus der linken Spalte des Schieberegisters (8) in Echtzeit auszulesen sowie die Antriebssollwerte in der rechten Spalte des Schieberegisters (9) im Echtzeitbetrieb zu aktualiseren. Diese Anforderung ergibt sich schon aus der Tatsache, daß bei einer Abweichung des Werkstückes gegenüber seiner Sollkultur möglichst frühzeitig insbesondere die Lagesollwerte (Lᵢ) nachgeregelt werden sollten, um den Taststift (8) in seinem zulässigen Auslenkbereich zu halten. Die Bufferung der Meßwerte und der Antriebssollwerte in den Schieberegistern (8, 9) geschieht nur, um in Zeiträumen, in denen der Steuerrechner (3, 4, 5) diese Werte nicht verarbeiten kann, einen reibungslosen Weiterbetrieb des Koordinatenmeßgerätes zu gewährleisten.

Zum Zeittakt (Takt) für die Baugruppe (1) und für die Baugruppen (13, 16, 19) und (22) ist noch zu sagen, daß es sich hierbei um einen systemweiten Takt handelt, der der Synchronisierung des Meßablaufes dient und damit folglich eine relativ geringe Taktfrequenz von beispielsweise 1 KHz aufweist. Es soll an dieser Stelle der Vollständigkeit halber noch explizit erwähnt werden, daß der Zeittakt (Takt) natürlich nichts mit dem Betriebstakt des Single Chip Controllers oder des Steuerrechners zu tun hat, der üblicherweise größer als 1 MHz ist.

Der Zeittakt (Takt) kann hierbei beispielsweise vom Betriebstakt des Steuerrechners (3, 4, 5) abgeleitet werden, indem der Betriebstakt auf eine relativ niedrige Taktrate heruntergeteilt wird. Selbstverständlich kann jedoch auch ein vom Steuerrechner unabhängiger Taktgeber verwendet werden.

Die Synchronisierung der Einschreibvorgänge in das Schieberegister (9) sollte dadurch erfolgen, indem der Steuerrechner (3, 4, 5) zunächst die Zeitinformation (8) der rechten Spalte ausliest, und das Schieberegister dann dementsprechend mit neuen Antriebssollwerten füllt. Die Ansteuerung der einzelnen Komponenten in der Baugruppe (1) erfolgt hierbei über einen Single Chip Controller (11), der die gesamte Organisation der Einzelkomponenten übernimmt. Der Single Chip Controller (11) steht natürlich mit dem Rechner (3, 4, 5) in Verbindung und Tausch mit diesem Daten (Di) aus.

## Patentansprüche

1. Koordinatenmeßgerät mit
- Antrieben (14, 23) zum Bewegen der Komponenten (2, 7) des Koordinatenmeßgerätes, wobei die Antriebe in einem fest definierten Zeittakt (Takt) nach einander vorgegeben Antriebssollwerten (Lᵢ, F_{Soll}) entsprechend verstellt werden, **gekennzeichnet durch** einen Steuerrechner (4) mit einem Betriebssystem ohne Echtzeitverhalten, in dem die Antriebssollwerte (Lᵢ, F_{Soll}) entsprechend berechnet werden eine Baugruppe (1) in der, im voraus, auf Anforderung des Steuerrechners (4) mehrere in den folgenden Takten anzufahrende Antriebssollwerte (Lᵢ, F_{Soll}) abgespeichert werden, und die die im voraus abgespeicherten Antriebssollwerte automatisch im Zeittakt (Takt) an die Antriebe (14, 23) weitergibt und/oder in der mehrere in dem vorgegebenen Zeittakt aufgenommene Meßwerte (X_{T}, Y_{T}, Z_{T}, Xₘ, Yₘ, Zₘ, Fᵢₓ, F_{iy}, F_{iz}) eines Meßablaufes abgespeichert werden und auf Anforderung des Steuerrechners zur Auswertung an den Steuerrechner (4) weitergereicht werden..

2. Koordinatenmeßgerät nach Anspruch 1, wobei die Baugruppe so ausgestaltet ist, daß die Antriebssollwerte (Lᵢ, F_{Soll}) und/oder die Meßwerte (Y_{T}, Y_{T}, Z_{T}, Xₘ, Yₘ, Zₘ, Fᵢₓ, F_{iy}, F_{iz}) zusammen mit einer Zeitinformation (t) gespeichert werden, die den Zeitpunkt im Meßablauf angibt, zu dem die betreffenden Antriebssollwerte angefahren werden und/oder die Meßwerte aufgenommen sind.

3. Koordinatenmeßgerät nach Ansprüchen 1 oder 2, wobei die Zeitinformation die gezählten Takte seit Beginn des Meßablaufes sind.

4. Koordinatenmeßgerät nach Ansprüchen 1 bis 3, wobei die Zeitinformation für die Meßwerte von einem Zähler (24) bereitgestellt wird, der im besagten Zeittakt (Takt) inkrementiert wird.

5. Koordinatenmeßgerät nach Ansprüchen 1 - 4, wobei die Baugruppe (1) wenigstens ein Schieberegister (8, 9) umfaßt, in dem die Antriebssollwerte und/oder die Meßwerte sowie gegebenenfalls die Zeitinformation abgespeichert werden.

6. Koordinatenmeßgerät nach Ansprüchen 1 - 5, wobei die Baugruppe (1) zusätzlich eine Schreib-Lese-Baugruppe (10) umfaßt, über die das Schieberegister (8, 9) beschrieben und/oder ausgelesen werden kann.

7. Koordinatenmeßgerät nach Ansprüchen 1 - 6, wobei die Baugruppe (1) wenigstens einen Single-Chip-Controller (11) aufweist, der das Schieberegister (8, 9) und gegebenenfalls den Zähler (24) und/oder die Schreib-Lese-Baugruppe (10) verwaltet.

8. Koordinatenmeßgerät nach Ansprüchen 1 - 6, wobei die Baugruppe (1) wenigstens einen Mikroprozessor umfaßt, der das Schieberegister und gegebenenfalls den Zähler und/oder die Schreib-Lese-Baugruppe (10) emuliert

9. Verfahren zur Steuerung eines Koordinatenmeßgerätes **gekennzeichent durch** die folgenden Verfahrensschritte:
- Erzeugen von Antriebssollwerten, die dem nachfolgenden Verstellen der Antriebe des Koordinatenmeßgerätes bei der Abarbeitung der Antriebssollwerte in einem fest definierten Zeittakt dienen, wobei die Antriebssollwerte in einem Rechner berechnet werden, der ein Betriebssystem ohne Echtzeitverhalten aufweist
- speichern der im voraus berechneten Antriebssollwerte in einer Baugruppe und sequentielles Auslesen und Weiterreichen der Antriebsollwerte in einem festen Zeittakt an die Antriebe und/oder abspeichern mehrerer in dem vorgegebenen Zeittakt aufgenommener Meßwerte (X_{T}, Y_{T}, Z_{T}, Xₘ, Yₘ, Zₘ, Fᵢₓ, F_{iy}, F_{iz}) eines Meßablaufes und weiterreichen der Meßwerte auf Anforderung des Steuerrechners zur Auswertung an den Steuerrechner.

10. Verfahren nach Anspruch 9, wobei die Antriebssollwerte und/oder die Meßwerte zusammen mit einer Zeitinformation in der Baugruppe abgespeichert werden, die den Zeitpunkt im Meßablauf angibt, zu dem der betreffende Antriebssollwert angefahren wird und/oder die Meßwerte aufgenommen sind.

11. Verfahren nach Anspruch 9, wobei die Zeitinformation die gezählten Takte seit Beginn des Meßablaufes sind.

## Claims

1. Coordinate measuring device having
- drives (14, 23) for moving the components (2, 7) of the coordinate measuring device, the drives being adjusted in succession in a firmly defined time cycle (cycle) in accordance with predefined desired drive values (Lᵢ, F_{des}),
**characterized by**
- a control computer (4) having an operating system without real-time behaviour, the desired drive values (Lᵢ, F_{des}) being correspondingly calculated in said control computer,
- a subassembly (1) which stores, in advance and at the request of the control computer (4), a plurality of desired drive values (Lᵢ, F_{des}) to be approached in the subsequent cycles and automatically forwards the desired drive values, which have been stored in advance, to the drives (14, 23) in the time cycle (cycle) and/or stores a plurality of measured values (X_{T}, Y_{T}, Z_{T}, Xₘ, Yₘ, Zₘ, Fᵢₓ, F_{iy}, F_{iz}) of a measuring procedure, which have been recorded in the predefined time cycle, and forwards them to the control computer (4) for evaluation at the request of the control computer.

2. Coordinate measuring device according to Claim 1, the subassembly being configured in such a manner that the desired drive values (Lᵢ, F_{des}) and/or the measured values (X_{T}, Y_{T}, Z_{T}, Xₘ, Yₘ, Zₘ, Fᵢₓ, F_{iy}, F_{iz}) are stored together with an item of time information (t) which specifies the time in the measuring procedure at which the relevant desired drive values are approached and/or the measured values are recorded.

3. Coordinate measuring device according to Claim 1 or 2, the item of time information being the cycles counted since the beginning of the measuring procedure.

4. Coordinate measuring device according to Claims 1 to 3, the item of time information for the measured values being provided by a counter (24) which is incremented in said time cycle (cycle).

5. Coordinate measuring device according to Claims 1-4, the subassembly (1) comprising at least one shift register (8, 9) which stores the desired drive values and/or the measured values and, if appropriate, the item of time information.

6. Coordinate measuring device according to Claims 1-5, the subassembly (1) additionally comprising a read/write subassembly (10) which can be used to write to and/or read from the shift register (8, 9).

7. Coordinate measuring device according to Claims 1-6, the subassembly (1) having at least one single-chip controller (11) which manages the shift register (8, 9) and, if appropriate, the counter (24) and/or the read/write subassembly (10).

8. Coordinate measuring device according to Claims 1-6, the subassembly (1) comprising at least one microprocessor which emulates the shift register and, if appropriate, the counter and/or the read/write subassembly (10).

9. Method for controlling a coordinate measuring device, **characterized by** the following method steps of:
- generating desired drive values which are used to subsequently adjust the drives of the coordinate measuring device when processing the desired drive values in a firmly defined time cycle, the desired drive values being calculated in a computer having an operating system without real-time behaviour,
- storing the desired drive values, which are calculated in advance, in a subassembly and sequentially reading and forwarding the desired drive values to the drives in a fixed time cycle and/or storing a plurality of measured values (X_{T}, Y_{T}, Z_{T}, Xₘ, Yₘ, Zₘ, Fᵢₓ, F_{iy}, F_{iz}) of a measuring procedure, which are recorded in the predefined time cycle, and forwarding the measured values to the control computer for evaluation at the request of the control computer.

10. Method according to Claim 9, the desired drive values and/or the measured values being stored in the subassembly together with an item of time information which specifies the time in the measuring procedure at which the relevant desired drive value is approached and/or the measured values are recorded.

11. Method according to Claim 9, the item of time information being the cycles counted since the beginning of the measuring procedure.

## Revendications

1. Appareil de mesure de coordonnées, qui présente :
- des entraînements (14, 23) qui déplacent les composants (2, 7) de l'appareil de mesure de coordonnées, les entraînements étant déplacés à une cadence fixe définie (pas) en fonction de valeurs de consigne d'entraînement (Lᵢ, F_{Soll}) successives prédéterminées,
**caractérisé par**
- un calculateur de commande (4) dont le système d'exploitation ne travaille pas en temps réel et dans lequel les valeurs de consigne d'entraînement (Lᵢ, F_{Soll}) sont calculées de manière appropriée,
- un module (1) dans lequel plusieurs valeurs de consigne d'entraînement (Lᵢ, F_{Soll}) qui doivent être lancées au cours des pas suivants sont préalablement conservées en mémoire à l'invitation du calculateur de commande (4) et qui transmet automatiquement les valeurs de consigne d'entraînement conservées en mémoire à la cadence (pas) aux entraînements (14, 23) et/ou dans lequel plusieurs valeurs de mesure (X_{T}, Y_{T}, Z_{T}, Xₘ, Yₘ, Zₘ, Fᵢₓ, F_{iy}, F_{iz}) du déroulement d'une mesure enregistrées lors du pas précédent sont conservées en mémoire et sont transmises pour évaluation au calculateur de commande (4) à l'invitation du calculateur de commande.

2. Appareil de mesure de coordonnées selon la revendication 1, dans lequel le module est configuré de telle sorte que les valeurs de consigne d'entraînement (Lᵢ, F_{Soll}) et/ou les valeurs de mesure (X_{T}, Y_{T}, Z_{T}, Xₘ, Yₘ, Zₘ, Fᵢₓ, F_{iy}, F_{iz}) sont conservées en mémoire en même temps qu'une information de temps (t) qui indique l'instant du déroulement de la mesure auquel les valeurs de consigne d'entraînement concernées sont lancées et/ou auxquelles les valeurs de mesure ont été enregistrées.

3. Appareil de mesure de coordonnées selon les revendications 1 ou 2, dans lequel les informations de temps sont les pas comptés depuis le début du déroulement de la mesure.

4. Appareil de mesure de coordonnées selon les revendications 1 à 3, dans lequel les informations de temps pour les valeurs de mesure sont préparées par un compteur (24) qui est incrémenté à ladite cadence (pas).

5. Appareil de mesure de coordonnées selon les revendications 1 à 4, dans lequel le module (1) comprend au moins un registre mobile (8, 9) dans lequel les valeurs de consigne d'entraînement et/ou de mesure ainsi qu'éventuellement les informations de temps sont conservées en mémoire.

6. Appareil de mesure de coordonnées selon les revendications 1 à 5, dans lequel le module (1) comprend en outre un module d'écriture-lecture (10) qui permet d'écrire et/ou lire sur le registre mobile (8, 9).

7. Appareil de mesure de coordonnées selon les revendications 1 à 6, dans lequel le module (1) présente au moins un contrôleur (11) à puce unique qui gère le registre mobile (8, 9) et éventuellement le compteur (24) et/ou le module d'écriture-lecture (10).

8. Appareil de mesure de coordonnées selon les revendications 1 à 6, dans lequel le module (1) comprend au moins un microprocesseur qui émule le registre mobile et éventuellement le compteur et/ou le module d'écriture-lecture (10).

9. Procédé de commande d'un appareil de mesure de coordonnées, **caractérisé par** les étapes de traitement suivantes :
- formation de valeurs de consigne d'entraînement qui servent à déplacer successivement les entraînements de l'appareil de mesure de coordonnées lors de l'établissement des valeurs de consigne d'entraînement à une cadence fixe définie, les valeurs de consigne d'entraînement étant calculées dans un calculateur dont le système d'exploitation ne travaille pas en temps réel,
- mise en mémoire des valeurs de consigne d'entraînement préalablement calculées dans un module et lecture et envoi des valeurs de consigne successives à une cadence fixe aux entraînements et/ou mise en mémoire de plusieurs valeurs de mesure (X_{T}, Y_{T}, Z_{T}, Xₘ, Yₘ, Zₘ, Fᵢₓ, F_{iy}, F_{iz}) enregistrées à la cadence prédéterminée pendant le déroulement d'une mesure et envoi des valeurs de mesure pour évaluation au calculateur de commande à l'invitation du calculateur de commande.

10. Procédé selon la revendication 9, dans lequel les valeurs de consigne d'entraînement et/ou les valeurs de mesure sont conservées en mémoire dans le module en même temps que des informations de temps qui indiquent l'instant du déroulement de la mesure auquel la valeur de consigne d'entraînement concernée est lancée et/ou les valeurs de mesure ont été enregistrées.

11. Procédé selon la revendication 9, dans lequel les informations de temps sont les pas comptés depuis le début du déroulement de la mesure.
